# EUROPÄISCHE PATENTSCHRIFT

(11) **EP 3 439 079 B1**
(45) Veröffentlichungstag und Bekanntmachung des Hinweises auf die Patenterteilung: **30.10.2019**
(21) Anmeldenummer: 18174740.3
(22) Anmeldetag: 29.05.2018
(51) Int. Cl.: H01M 4/139

(54) **VERFAHREN UND VORRICHTUNG ZUR THERMISCHEN BEHANDLUNG EINES ELEKTRODENFILMS AUF EINEM METALLISCHEN STROMKOLLEKTOR**
PROCESS AND DEVICE FOR HEAT TREATMENT OF ELECTRODE FILM ON A METALLIC CURRENT COLLECTOR
PROCÉDÉ ET DISPOSITIF DE TRAITEMENT THERMIQUE D'UN FILM À ÉLECTRODE SUR UN COLLECTEUR DE COURANT MÉTALLIQUE

(30) Priorität: 02.08.2017 DE 102017213384
(43) Veröffentlichungstag der Anmeldung: 06.02.2019
(73) Patentinhaber: VW Kraftwerk GmbH, 38440 Wolfsburg (DE); VARTA Microbattery GmbH, 73479 Ellwangen Jagst (DE)
(72) Erfinder: Gaugler, Andreas, 73479 Ellwangen (DE); Huth, Andreas, 38159 Vechelde (DE); Schreiber, Werner, 38527 Meine (DE); Wroblewski, Mario, 73434 Aalen (DE)
(74) Vertreter: Patentanwaltskanzlei Cartagena

(56) Entgegenhaltungen:
- JP-A- 2003 217 672
- JP-A- 2010 073 559
- JP-A- 2011 082 059
- US-A- 4 680 871
- US-A- 5 050 315
- US-A1- 2009 100 669
- US-A1- 2011 289 790

## Beschreibung

Die Erfindung betrifft ein Verfahren und eine Vorrichtung zur thermischen Behandlung eines Elektrodenfilms auf einem metallischen Stromkollektor.

Elektrochemische Zellen umfassen stets eine positive und eine negative Elektrode. Bei der Entladung einer elektrochemischen Zelle findet eine energieliefernde chemische Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom - meist über einen äußeren Verbraucher - zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären elektrochemischen Zellen ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Unter den bekannten sekundären elektrochemischen Zellen werden vergleichsweise hohe Energiedichten insbesondere von Lithium-Ionen-Batterien erreicht. Lithium-Ionen-Batterien enthalten in vielen Fällen einen Zellenstapel (stack), der aus mehreren Einzelzellen besteht. Auch Wickelzellen (jelly rolls) kommen häufig zum Einsatz. Bei den Zellen in einer Lithium-Ionen-Batterie handelt es sich meist um einen Verbund aus Elektroden und Separatoren mit der Sequenz "positive Elektrode / Separator / negative Elektrode". Mitunter werden solche Einzelzellen als sogenannte Bizellen mit den möglichen Sequenzen "negative Elektrode / Separator / positive Elektrode / Separator / negative Elektrode" oder "positive Elektrode / Separator / negative Elektrode / Separator / positive Elektrode" hergestellt. Die Elektroden umfassen dabei üblicherweise metallische Stromkollektoren, die meist in Form von Folien, Netzen, Gittern, Schäumen, Vliesen oder Filzen vorliegen. Im Fall der positiven Elektrode werden als Stromkollektoren meist Netze oder Folien aus Aluminium, beispielsweise aus Aluminiumstreckmetall oder aus einer Aluminiumfolie, eingesetzt. Auf der Seite der negativen Elektrode werden als Stromkollektoren meist Netze oder Folien aus Kupfer verwendet.

In der Regel werden die beschriebenen Zellen für Lithium-Ionen-Batterien in einem mehrstufigen Verfahren produziert. Üblich ist, dass in einem ersten Schritt die Elektroden hergestellt werden, die dann anschließend mit einem oder mehreren Separatoren zu den erwähnten Elektroden-Separator-Verbünden kombiniert werden. Elektroden und Separatoren können lose gestapelt oder gewickelt werden oder auch in einem Laminationsschritt miteinander verbunden werden.

Zur Herstellung der Elektroden werden aus meist pastenförmigen Zusammensetzungen, die ein geeignetes elektrochemisch aktives Material (kurz "Aktivmaterial") umfassen, auf den Stromkollektoren dünne Elektrodenfilme gebildet, beispielsweise mittels eines Rakel oder mittels einer Breitschlitzdüse (slot die). Für die Elektroden einer Lithium-Ionen-Batterie geeignete Aktivmaterialien müssen Lithium-Ionen aufnehmen und wieder abgeben können, die beim Laden bzw. Entladen von der negativen zur positiven Elektrode (und umgekehrt) wandern.

Als für negative Elektroden von Lithium-Ionen-Batterien geeignete Aktivmaterialien kommen insbesondere graphitischer Kohlenstoff oder zur Interkalation von Lithium befähigte nicht-graphitische Kohlenstoffmaterialien in Frage. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für positive Elektroden eignet sich insbesondere Lithiumkobaltoxid (LCO) mit der Summenformel LiCoO₂, Lithiumnickelmangancobaltoxid (NMC) mit der Summenformel LiNiₓMn_{y}Co_{z}O₂, Lithiummanganspinell (LMO) mit der Summenformel LiMn₂O₄, Lithiumeisenphosphat (LFP) mit der Summenformel LiFePO₄ oder Lithiumnickelcobaltaluminiumoxid mit der Summenformel LiNiₓCo_{y}Al_{z}O₂ (NCA). Auch Mischungen der genannten Materialien können eingesetzt werden.

Neben den Aktivmaterialien enthalten die Zusammensetzungen in der Regel noch einen Elektrodenbinder (kurz "Binder"), einen Leitfähigkeitsverbesserer, ein Lösungs- und/oder Suspensionsmittel sowie ggf. noch Additive, beispielsweise zur Beeinflussung ihrer Verarbeitungseigenschaften. Ein Elektrodenbinder bildet eine Matrix, in die das Aktivmaterial sowie gegebenenfalls der Leitfähigkeitsverbesserer eingelagert sein können. Die Matrix soll für eine erhöhte strukturelle Stabilität während durch die Lithiierung und Delithiierung verursachten Volumenexpansionen und -kontraktionen sorgen. Als Lösungs- und/oder Suspensionsmittel kommen z.B. Wasser oder organische Lösungsmittel wie N-Methyl-2-Pyrrolidon (NMP) oder N-Ethyl-2-Pyrrolidon (NEP) in Frage. Ein Beispiel für einen wässrig prozessierbaren Binder ist Natrium-Carboxymethylzellulose (Na-CMC). Ein Beispiel für einen in organischen Lösungsmitteln prozessierbaren Binder ist Polyvinylidendifluorid (PVDF). Als Additive können z.B. Rheologiehilfsmittel zugesetzt werden. Bei dem Leitfähigkeitsverbesserer handelt es sich meist um ein elektrisch leitfähiges kohlenstoffbasiertes Material, insbesondere um Leitruß, Leitgraphit, Kohlenstofffasern oder Kohlenstoffröhrchen.

In der Zusammensetzung enthaltenes Lösungs- und/oder Suspensionsmittel findet sich üblicherweise in den auf den Stromkollektoren gebildeten Elektrodenfilmen wieder und muss aus diesen entfernt werden. Die trockenen Elektrodenfilme können dann verdichtet werden, beispielsweise in einem Kalandrierprozess. Die so gebildeten Elektroden können zu den eingangs erwähnten Zellen verbaut werden.

Das Trocknen von auf Stromkollektoren gebildeten Elektrodenfilmen, also das Entfernen des in den Elektrodenfilmen enthaltenen Lösungs- und/oder Suspensionsmittels, ist zeit- und energieaufwendig. In den meisten der Anmelderin bekannten Produktionsverfahren erfolgt die Trocknung der Elektrodenfilme mittels eines temperierten Gases, insbesondere mittels temperierter Luft. Das Gas erwärmt den Elektrodenfilm und darin enthaltenes Lösungs- und/oder Suspensionsmittel. Die Erwärmung erfolgt dabei zunächst an der Oberfläche des Elektrodenfilms und breitet sich dann graduell ins Innere des Films aus. Entsprechend schreitet auch die Trocknung graduell von außen nach innen fort; eine außenliegende Schicht des Elektrodenfilms kann bereits getrocknet sein, während der Elektrodenfilm in einer an den Stromkollektor angrenzenden Schicht noch erhebliche Mengen an Lösungs- und/oder Suspensionsmittel enthält. Dies kann insoweit problematisch sein, als beim Entfernen des Lösungs- und/oder Suspensionsmittels häufig ein filmartiger Rückstand verbleibt. Wird dieser in einer außenliegenden Schicht des Elektrodenfilms gebildet, so kann dieser eine weitere Trocknung des Elektrodenfilms erheblich verzögern, da Lösungs- und/oder Suspensionsmittel aus der an den Stromkollektor angrenzenden Schicht nicht mehr problemlos austreten kann. Unter Umständen können sich sogar Blasen bilden. Dem versucht man insbesondere durch ausreichend hohe Trocknungszeiten entgegenzuwirken. Bei langsamer Trocknung tritt der beobachtete Trocknungsgradient nur in geringem Umfang auf. Allerdings erhöht die gezielt verlangsamte Trocknung den ohnehin bereits erheblichen für das Entfernen des Lösungs- und/oder Suspensionsmittels anfallenden Zeitaufwand.

Aus JP 2010-73559 A ist es bekannt, die Trocknung der Elektrodenfilme mittels des temperierten Gases durch den zusätzlichen Einsatz eines Induktionsofens zu unterstützen.

Die induktive Trocknung eines Elektrodenfilms ist außerdem aus JP 2011-82059 A bekannt.

Der vorliegenden Erfindung liegt die Aufgabe zugrunde, ein verbessertes Verfahren zum Trocknen von Elektrodenfilmen bereitzustellen.

Zur Lösung dieser Aufgabe schlägt die Erfindung das nachfolgend beschriebene Verfahren mit den Merkmalen des Anspruchs 1 sowie die Vorrichtung mit den Merkmalen des Anspruchs 8, vor. Weiterbildungen der Erfindung sind Gegenstand von Unteransprüchen.

Das erfindungsgemäße Verfahren lässt sich gezielt zum Trocknen von Elektrodenfilmen einsetzen, aufgrund einiger weiterer Anwendungsfälle ist es ist jedoch allgemeiner auf eine thermische Behandlung mindestens eines Elektrodenfilms auf einem metallischen Stromkollektor gerichtet.

In allen Fällen kommt es gemäß dem erfindungsgemäßen Verfahren zu einer Erwärmung des mindestens einen Elektrodenfilms. Im Unterschied zum Stand der Technik wird die Erwärmung jedoch nicht ausschließlich mittels eines temperierten Gases herbeigeführt. Stattdessen wird der metallische Stromkollektor mittels mindestens einer Induktionseinrichtung induktiv erwärmt.

Induktives Erwärmen elektrisch leitfähiger Körper ist ein bekannter Vorgang, bei dem Metalle durch in ihnen erzeugte Wirbelstromverluste bei in der Regel hohem Wirkungsgrad geheizt werden. Vorliegend wird der metallische Stromkollektor durch in ihm erzeugte Wirbelströme erwärmt. Der erwärmte Stromkollektor erhitzt dann wiederum den mindestens einen Elektrodenfilm samt gegebenenfalls enthaltenem Lösungs- und/oder Suspensionsmittel. Das Lösungs- und/oder Suspensionsmittel wird in der Folge aus dem Elektrodenfilm ausgetrieben.

Der Unterschied zum Stand der Technik ist offensichtlich. Wie eingangs ausgeführt, werden beim Trocknen von Elektrodenfilmen gemäß Stand der Technik die Elektrodenfilme von außen erwärmt, so dass sich ein nach innen gerichteter Trocknungsgradient bildet. Gemäß dem vorliegend beschriebenen Verfahren erfolgt dagegen eine Erwärmung von innen. Der induktiv erwärmte Stromkollektor überträgt Wärme auf den auf ihm befindlichen Elektrodenfilm. In diesem enthaltenes Lösungs- und/oder Suspensionsmittel wird in der Folge ausgetrieben. Die Trocknung von Elektrodenfilmen konnte so erheblich beschleunigt werden.

Bei dem metallischen Stromkollektor handelt es sich bevorzugt um eine Metallfolie, ein Metallnetz, ein Metallgitter oder einen Metallschaum. Alternativ kann als Stromkollektor aber auch ein aus Metallfäden oder Metallfilamenten aufgebautes Substrat, insbesondere um einen Filz, ein Vlies oder ein Gewebe, zum Einsatz kommen.

Besonders bevorzugt besteht der metallische Stromkollektor aus Kupfer, Nickel, Aluminium, einer Legierung eines dieser Metalle oder aus Stahl, insbesondere aus Edelstahl.

Der Elektrodenfilm unterscheidet sich bevorzugt nicht von aus dem Stand der Technik bekannten Elektrodenfilmen. Er umfasst in der Regel ein Elektrodenaktivmaterial sowie gegebenenfalls weitere Komponenten wie einen Elektrodenbinder und einen Leitfähigkeitsverbesserer. Bevorzugt handelt es sich bei dem Elektrodenaktivmaterial um ein für positive oder für negative Elektroden von Lithium-Ionen-Batterien geeignetes Aktivmaterial.

Bevorzugt wird als metallischer Stromkollektor ein rechteckiger oder bandförmiger Stromkollektor verwendet. Bei Verwendung eines rechteckigen Stromkollektors ist in der Regel auch der darauf angeordnete mindestens eine Elektrodenfilm rechteckig ausgebildet. Bei Verwendung eines bandförmigen Stromkollektors ist in der Regel auch der darauf angeordnete mindestens eine Elektrodenfilm bandförmig ausgebildet.

Abhängig vom verwendeten Elektrodenaktivmaterial wird ein Stromkollektor für eine positive und/oder eine negative Elektrode verwendet. Handelt es sich bei dem Elektrodenaktivmaterial beispielsweise um ein Aktivmaterial für die positive Elektrode einer Lithium-Ionen-Zelle, so besteht der Stromkollektor bevorzugt aus Aluminium oder aus einer Aluminiumlegierung.

Im Rahmen des erfindungsgemäßen Verfahrens ist es bevorzugt, dass der Stromkollektor mitsamt dem mindestens einen Elektrodenfilm durch einen Wirkbereich der mindestens einen Induktionseinrichtung geführt wird. Ein hierfür geeignetes Transportmittel wären beispielsweise Transportrollen. So kann beispielsweise ein bandförmiger Stromkollektor mit einem darauf befindlichen bandförmigen Elektrodenfilm mittels der Transportrollen kontinuierlich und abschnittsweise durch den Wirkbereich geführt werden.

Es ist bevorzugt, dass der Stromkollektor im Rahmen des Verfahrens auf eine Temperatur im Bereich von 30 °C bis 350 °C erwärmt wird.

Als Induktionseinrichtung eignen sich grundsätzlich alle Einrichtungen, die dazu geeignet sind, ein elektrisches Wechselfeld zu erzeugen, das in einem metallischen Gegenstand einen Wirbelstrom induzieren kann. Bevorzugt handelt es sich bei den Induktionseinrichtungen um Spulen, insbesondere um Spulen umfassend jeweils mehrere Spulenwindungen, oder aber die Induktionseinrichtungen umfassen jeweils mindestens eine solche Spule.

Gegebenenfalls kann es vorteilhaft sein, die Spule aus unterschiedlichen Materialien zu fertigen. Gerade Abschnitte der Spule können beispielsweise aus Kupfer gefertigt sein, ungerade Abschnitte (Bögen) aus Aluminium. Einzelne Spulenwindungen können hierbei über ihre Länge einen konstanten oder variablen Querschnitt aufweisen.

Das erfindungsgemäße Verfahren lässt sich hervorragend im Rahmen eines Herstellungsverfahrens für Elektroden einsetzen. Hierbei wird zur Bildung des mindestens einen Elektrodenfilms in der Regel eine lösungsmittel- und/oder suspensionsmittelhaltige Paste durchgehend oder intermittierend auf den bandförmigen Stromkollektor aufgebracht. Das Lösungsmittel und/oder das Suspensionsmittel aus der Paste werden dann bei der thermischen Behandlung entfernt, soweit es zum Zeitpunkt der thermischen Behandlung in dem Elektrodenfilm noch enthalten ist.

In bevorzugten Ausführungsformen kann das Entfernen des Lösungsmittels und/oder des Suspensionsmittels durch Kontaktieren des mindestens einen Elektrodenfilms mit einem erwärmten Gasstrom, insbesondere mit einem erwärmten Luftstrom, unterstützt werden. Bevorzugt ist der Gasstrom auf eine Temperatur im Bereich von 20 bis 250 °C, bevorzugt auf eine Temperatur im Bereich von 50 bis 250 °C erwärmt.

Aus dem Elektrodenfilm ausgetriebenes Lösungsmittel und/oder Suspensionsmittel kann mit dem Gasstrom abgeführt werden.

Es kann bevorzugt sein, das Lösungsmittel und/oder das Suspensionsmittel mittels einer Kondensationseinrichtung zu kondensieren, insbesondere durch Kondensation aus dem Gasstrom abzutrennen. Hierzu kann die mindestens eine Kondensationseinrichtung im Strömungsweg des Gasstroms positioniert werden.

Induktionseinrichtungen und deren Spulen erwärmen sich im Betrieb selbst nicht. Erfindungsgemäß macht man sich das zunutze, indem das Lösungsmittel und/oder das Suspensionsmittel an einer Spule der mindestens einen Induktionseinrichtung kondensiert wird. Zur Förderung der Kondensation kann es bevorzugt sein, diese Spule zu kühlen.

Die Spule oder einzelne ihrer Windungen können massiv oder hohl sein. Weiterhin können die Spule oder die Spulenwindungen mindestens einen gekühlten Bereich oder Abschnitt und mindestens einen erwärmten Bereich oder Abschnitt aufweisen. Eine Kühlung bestimmter Abschnitte der Spule oder der Spulenwindungen kann zweckmäßig sein, um eine gezielte Kondensation im Bereich der gekühlten Abschnitte herbeizuführen. Eine Erwärmung bestimmter Abschnitte der Spulenwindungen kann zweckmäßig sein, um eine gezielte Kondensation im Bereich der erwärmten Abschnitte zu vermeiden.

Das erfindungsgemäße Verfahren kann grundsätzlich nicht nur zur Entfernung von Lösungsmittel und/oder Suspensionsmittel aus Elektrodenfilmen dienen. Es kann auch bevorzugt sein, die thermische Behandlung des mindestens einen Elektrodenfilms durchzuführen unmittelbar bevor der mindestens eine Elektrodenfilm mechanischen Belastungen ausgesetzt wird, insbesondere bevor er einem Kalandrierprozess unterzogen wird oder bevor er gewickelt wird. Die Erwärmung vermag die Flexibilität und die plastische Verformbarkeit des Elektrodenfilms in begrenztem Umfang zu beeinflussen. Durch die Erwärmung kann man beispielsweise das Risiko senken, dass der mindestens eine Elektrodenfilm sich bei einem Wickelvorgang von dem metallischen Stromableiter ablöst.

In einer besonders bevorzugten Ausführungsform ist der mindestens eine thermisch zu behandelnde Elektrodenfilm Bestandteil einer Zelle umfassend mindestens eine positive und mindestens eine negative Elektrode, insbesondere einer Wickelzelle oder einer Stapelzelle. Die Zelle umfasst bevorzugt die Sequenz positive Elektrode / Separator / negative Elektrode. Als Bestandteil einer Zelle ist der thermisch zu behandelnde mindestens eine Elektrodenfilm in der Regel bereits kalandriert. Des Weiteren weist er in der Regel auch keine hohen Anteile an Lösungsmittel und/oder Suspensionsmittel mehr auf. Ungeachtet dessen kann es zweckmäßig sein, auch fertige Zellen gemäß dem erfindungsgemäßen Verfahren zu behandeln, beispielsweise um Feuchtigkeit aus dem Elektrodenfilm auszutreiben, die bei einer Lagerung der Zelle in den mindestens einen Elektrodenfilm eingedrungen ist.

Es ist möglich, sowohl Zellen ohne Gehäuse oder Zellen in einem offenen Gehäuse als auch in einem Gehäuse befindliche Zellen gemäß der Erfindung zu behandeln. In diesen Fällen ist es grundsätzlich möglich, dass eine oder mehrere Komponenten des Gehäuses zum induktiven Erwärmen eingesetzt werden. Beispielsweise kann ein Gehäuseteil als Bestandteil der Induktionseinrichtung fugieren.

In einer bevorzugten Ausführungsform des Verfahrens ist der thermisch zu behandelnde Elektrodenfilm Bestandteil einer in einem verschlossenen und mit Elektrolyt befülltem Gehäuse angeordneten Zelle. In diesem Fall dient das Verfahren nicht der Trocknung von Elektrodenfilmen. Vielmehr kann durch die Erwärmung des Stromkollektors die Verteilung von Elektrolyt innerhalb der Zelle und innerhalb des Gehäuses beschleunigt werden.

Die erfindungsgemäße Vorrichtung dient wie das erfindungsgemäße Verfahren zur thermischen Behandlung mindestens eines Elektrodenfilms auf einem metallischen Stromkollektor, besonders bevorzugt zur thermischen Behandlung mindestens eines Elektrodenfilms gemäß dem beschriebenen Verfahren. Es zeichnet sich durch die folgenden Merkmale aus:
- Die Vorrichtung umfasst mindestens eine Induktionseinrichtung.
- Die Vorrichtung umfasst Transportmittel um den Elektrodenfilm einschließlich des Stromkollektors durch den Wirkbereich der mindestens einen Induktionseinrichtung zu führen.

Geeignete Induktionseinrichtungen und Transportmittel fanden bereits bei der Beschreibung des erfindungsgemäßen Verfahrens Erwähnung. Auf die entsprechenden Textstellen wird hiermit verwiesen.

Besonders bevorzugt umfasst die Vorrichtung mindestens eine Kondensationseinrichtung zum Kondensieren von aus dem Elektrodenfilm austretendem Lösungsmittel und/oder Suspensionsmittel.

Wie bereits aus den Erläuterungen zum erfindungsgemäßen Verfahren hervorgeht, dient eine Spule der mindestens einen Induktionseinrichtung als Kondensationseinrichtung. Die Spule ist bevorzugt mit mindestens einer Temperiermittelquelle derart gekoppelt, dass sie mit Temperiermittel aus der mindestens einen Temperiermittelquelle gekühlt werden kann.

Alternativ oder zusätzlich kann die Spule mit mindestens einer weiteren Temperiermittelquelle derart gekoppelt sein, dass sie mit Temperiermittel aus der mindestens einen weiteren Temperiermittelquelle erwärmt werden kann.

Besonders bevorzugt umfasst die Spule innenliegende Kanäle, die von Temperiermittel aus der Temperiermittelquelle durchflossen werden können.

In weiteren bevorzugten Ausführungsformen kann die Vorrichtung mindestens eine Kondensatsammeleinrichtung zum Sammeln von Kondensat, das sich in oder an der Kondensationseinrichtung, insbesondere an einer Oberfläche der mindestens einen Spule, bildet. Bei der Kondensatsammeleinrichtung kann es sich beispielsweise um einen Kondensatsammelkanal handeln, in den an der Spule kondensierte Flüssigkeit abtropfen kann. Diese Kondensatsammeleinrichtung umfasst bevorzugt ein nicht induktiv erwärmbares Material oder besteht in bevorzugten Ausführungsformen aus einem solchen.

Wenn eine Spule der mindestens einen Induktionseinrichtung als Kondensationseinrichtung dient, so kann begleitend vorgesehen sein, dass die Spule eine Formgebung aufweist, die es begünstig, dass an der Spule gebildetes Kondensat in die Kondensatsammeleinrichtung tropft. Beispielsweise kann die Spule einen Bereich oder Abschnitt aufweisen, in dem ihre Unterseite als spitz zulaufende Kante ausgebildetes ist, unter der der Kondensatsammelkanal angeordnet ist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen, jeweils schematisch:
Figur 1 eine Illustration (Draufsicht schräg von vorne) einer einfachen Ausführungsform der erfindungsgemäßen Vorrichtung zur Durchführung des erfindungsgemäßen Verfahrens und
Figur 2 eine Illustration (Querschnittsdarstellung) einer weiteren einfachen Ausführungsform der erfindungsgemäßen Vorrichtung zur Durchführung des erfindungsgemäßen Verfahrens.

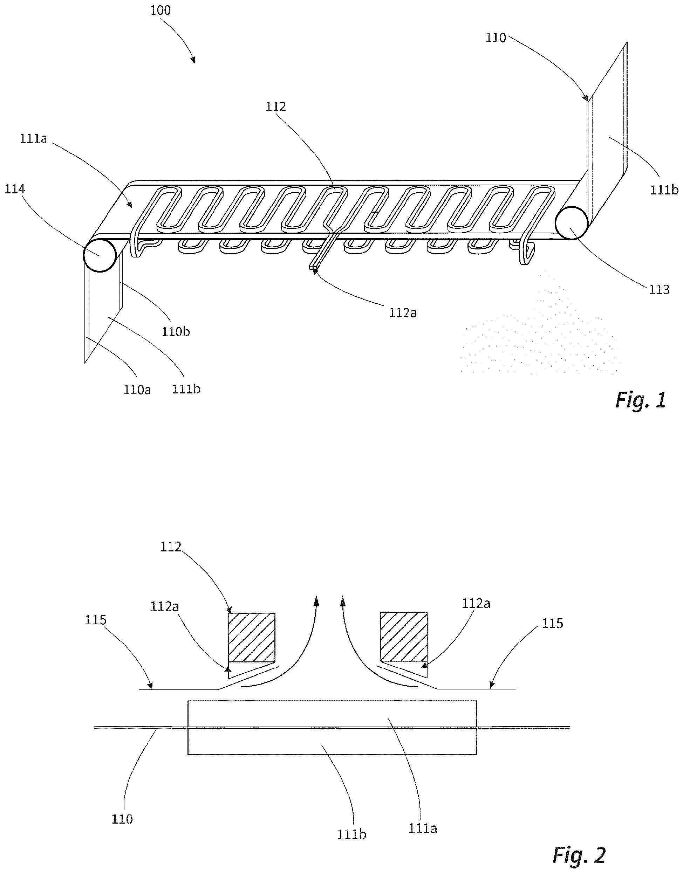

Die in Figur 1 dargestellte Vorrichtung 100 umfasst die Induktionseinrichtung 112, die über den Anschluss 112a ans Stromnetz angeschlossen werden kann. Mittels der Induktionseinrichtung 112 kann der bandförmige metallische Stromkollektor 110 erwärmt werden. Auf dessen Vorderseite ist ein erster Elektrodenfilm 111a aufgebracht, auf dessen Rückseite ein zweiter Elektrodenfilm 111b. Die Längsränder 110a und 110b des Stromkollektors 110 sind unbeschichtet.

Als Transportmittel umfasst die Vorrichtung 100 die Transportrollen 113 und 114, mittels denen der Stromkollektor 110 samt der auf ihn aufgebrachten Elektrodenfilme 111a und 111b durch den Wirkbereich der Induktionseinrichtung geführt werden kann. Dort wird der Stromkollektor 110 induktiv erwärmt und überträgt die Wärme auf die Elektrodenfilme 111a und 111b.

Figur 2 illustriert eine Ausführungsform der Erfindung, bei der das Entfernen von Lösungsmittel und/oder Suspensionsmittel aus zwei Elektrodenfilmen 111a und 111b durch Kontaktieren der Elektrodenfilme 111a und 111b mit einem erwärmten Gasstrom unterstützt wird. Im Gasstrom enthaltenes Lösung- und/oder Suspensionsmittel kann mit Hilfe der gegebenenfalls gekühlten Induktionseinrichtung 112 kondensiert werden. Der Strömungsverlauf des Gasstroms ist durch Pfeile angezeigt. Das kondensierte Lösung- und/oder Suspensionsmittel kann über die in einer spitzen Kante mündende Unterseite 112a der Induktionseinrichtung 112 in die aus einem elektrisch nicht leitenden Material bestehende Kondensatsammeleinrichtung 115 abtropfen.

## Patentansprüche

1. Verfahren zur thermischen Behandlung mindestens eines Elektrodenfilms (111a; 111b) auf einem metallischen Stromkollektor (110), **gekennzeichnet durch** die folgenden Schritte
a. der Stromkollektor (110) wird mittels mindestens einer Induktionseinrichtung induktiv erwärmt, und
b. aus dem Elektrodenfilm austretendes Lösungsmittel und/oder Suspensionsmittel wird mittels mindestens einer Kondensationseinrichtung kondensiert,
wobei
c. als Kondensationseinrichtung eine Spule der mindestens einen Induktionseinrichtung (112) dient.

2. Verfahren nach Anspruch 1 mit den folgenden zusätzlichen Merkmalen:
a. Als metallischer Stromkollektor (110) wird ein rechteckiger oder bandförmiger Stromkollektor verwendet.
b. Als metallischer Stromkollektor (110) wird ein Stromkollektor einer positiven und/oder einer negativen Elektrode verwendet.
c. Der Stromkollektor (110) wird durch den Wirkbereich mindestens einer Induktionseinrichtung geführt (112).

3. Verfahren nach Anspruch 1 oder Anspruch 2 mit den folgenden zusätzlichen Merkmalen:
a. Zur Bildung des mindestens einen Elektrodenfilms (111a; 111b) wird eine lösungsmittel- und/oder suspensionsmittelhaltige Paste durchgehend oder intermittierend auf den bandförmigen Stromkollektor (110) aufgebracht.
b. Das Lösungsmittel und/oder das Suspensionsmittel werden bei der thermischen Behandlung entfernt.

4. Verfahren nach Anspruch 3 mit dem folgenden zusätzlichen Merkmal:
a. Das Entfernen des Lösungsmittels und/oder des Suspensionsmittels wird durch Kontaktieren des mindestens einen Elektrodenfilms (111a; 111b) mit einem erwärmten Gasstrom unterstützt.

5. Verfahren nach Anspruch 4 mit mindestens einem derfolgenden zusätzlichen Merkmale:
a. Entferntes Lösungsmittel und/oder Suspensionsmittel werden mittels einer Kondensationseinrichtung aus dem Gasstrom abgetrennt.
b. Die mindestens eine Kondensationseinrichtung wird im Strömungsweg des Gasstroms positioniert.
c. Das Lösungsmittel und/oder das Suspensionsmittel werden an der Induktionseinrichtung (112), insbesondere an einer Spule der mindestens einen Induktionseinrichtung (112), kondensiert.
d. Die Spule der mindestens einen Induktionseinrichtung (112) wird zur Förderung der Kondensation gekühlt.

6. Verfahren nach einem der vorhergehenden Ansprüche mit dem folgenden zusätzlichen Merkmal:
a. Die thermische Behandlung wird durchgeführt unmittelbar bevor der mindestens eine Elektrodenfilm (111a; 111b) mechanischen Belastungen ausgesetzt wird.

7. Verfahren nach Anspruch 1 oder Anspruch 2 mit mindestens einem der folgenden zusätzlichen Merkmale:
a. Der thermisch zu behandelnde Elektrodenfilm ist Bestandteil einer Zelle umfassend mindestens eine positive und mindestens eine negative Elektrode.
b. Der thermisch zu behandelnde Elektrodenfilm ist Bestandteil einer in einem verschlossenen und mit Elektrolyt befülltem Gehäuse angeordneten Zelle.

8. Vorrichtung (100) zur thermischen Behandlung mindestens eines Elektrodenfilms (111a; 111b) auf einem metallischen Stromkollektor (110), **gekennzeichnet durch** die folgenden Merkmale:
a. Die Vorrichtung umfasst mindestens eine Induktionseinrichtung (112).
b. Die Vorrichtung umfasst ein Transportmittel (113; 114) um den mindestens einen Elektrodenfilm (111a; 111b) einschließlich des Stromkollektors (110) durch den Wirkbereich der mindestens einen Induktionseinrichtung (112) zu führen.
c. Die Vorrichtung (100) umfasst mindestens eine Kondensationseinrichtungzum Kondensieren von aus dem Elektrodenfilm austretendem Lösungsmittel und/oder Suspensionsmittel.
d. Als Kondensationseinrichtung dient eine Spule der mindestens einen Induktionseinrichtung (112).

9. Vorrichtung nach Anspruch 8 mit den folgenden zusätzlichen Merkmalen:
a. Die Spule ist mit mindestens einer Temperiermittelquelle derart gekoppelt, dass sie mit Temperiermittel aus der mindestens einen Temperiermittelquelle gekühlt und/oder erwärmt werden kann.
b. Die Spule umfasst innenliegende Kanäle, die von Temperiermittel aus der Temperiermittelquelle durchflossen werden können.

10. Vorrichtung nach Anspruch 8 oder Anspruch 9 mit den folgenden zusätzlichen Merkmalen:
a. Die Vorrichtung umfasst mindestens eine Kondensatsammeleinrichtung (115) zum Sammeln von Kondensat, das sich in oder an der Kondensationseinrichtung, insbesondere an einer Oberfläche der mindestens einen Spule, bildet.
b. Die Kondensatsammeleinrichtung umfasst ein nicht induktiv erwärmbares Material oder besteht aus einem solchen.

## Claims

1. Method for the thermal treatment of at least one electrode film (111a; 111b) on a metallic current collector (110), **characterized by** the following steps
a. the current collector (110) is inductively heated by means of at least one induction device, and
b. solvent and/or suspension medium emerging from the electrode film is condensed by means of at least one condensation device,
wherein
c. a coil of the at least one induction device (112) serves as condensation device.

2. Method according to Claim 1, having the following additional features:
a. A rectangular or strip-shaped current collector is used as the metallic current collector (110).
b. A current collector of a positive and/or of a negative electrode is used as the metallic current collector (110).
c. The current collector (110) is guided through the active region of at least one induction device (112) .

3. Method according to Claim 1 or Claim 2 having the following additional features:
a. In order to form the at least one electrode film (111a; 111b) a paste containing solvent and/or suspension medium is applied continuously or intermittently on the strip-shaped current collector (110).
b. The solvent and/or the suspension medium are/is removed during the thermal treatment.

4. Method according to Claim 3 having the following additional feature:
a. Removing the solvent and/or the suspension medium is assisted by contacting the at least one electrode film (111a; 111b) with a heated gas flow.

5. Method according to Claim 4 having at least one of the following additional features:
a. Removed solvent and/or suspension medium are/is separated from the gas flow by means of a condensation device.
b. The at least one condensation device is positioned in the flow path of the gas flow.
c. The solvent and/or the suspension medium are/is condensed at the induction device (112) in particular at a coil of the at least one induction device (112).
d. The coil of the at least one induction device (112) is cooled in order to promote the condensation.

6. Method according to any of the preceding claims having the following additional feature:
a. The thermal treatment is carried out directly before the at least one electrode film (111a; 111b) is subjected to mechanical loadings.

7. Method according to Claim 1 or Claim 2 having at least one of the following additional features:
a. The electrode film to be thermally treated is part of a cell comprising at least one positive and at least one negative electrode.
b. The electrode film to be thermally treated is part of a cell arranged in a closed housing filled with electrolyte.

8. Apparatus (100) for the thermal treatment of at least one electrode film (111a; 111b) on a metallic current collector (110) **characterized by** the following features:
a. The apparatus comprises at least one induction device (112).
b. The apparatus comprises a transport means (113; 114) in order to guide the at least one electrode film (111a; 111b) including the current collector (110) through the active region of the at least one induction device (112).
c. The apparatus (100) comprises at least one condensation device for condensing solvent and/or suspension medium emerging from the electrode film.
d. A coil of the at least one induction device (112) serves as condensation device.

9. Apparatus according to Claim 8 having the following additional features:
a. The coil is coupled to at least one temperature-regulating medium source in such a way that it can be cooled and/or heated by temperature-regulating medium from the at least one temperature-regulating medium source.
b. The coil comprises internal channels through which temperature-regulating medium from the temperature-regulating medium source can flow.

10. Apparatus according to Claim 8 or Claim 9 having the following additional features:
a. The apparatus comprises at least one condensate collecting device (115) for collecting condensate that forms in or on the condensation device, in particular on a surface of the at least one coil.
b. The condensate collecting device comprises a non-inductively heatable material or consists of such a material.

## Revendications

1. Procédé de traitement thermique d'au moins un film d'électrode (111a ; 111b) sur un collecteur de courant (110) métallique, **caractérisé par** les étapes suivantes
a. le collecteur de courant (110) est chauffé par induction au moyen d'au moins un dispositif d'induction et
b. le solvant et/ou l'agent de suspension qui s'écoule hors du film d'électrode est condensé au moyen d'au moins un dispositif de condensation,
c. une bobine de l'au moins un dispositif d'induction (112) servant de dispositif de condensation.

2. Procédé selon la revendication 1, comprenant les caractéristiques supplémentaires suivantes :
a. Un collecteur de courant rectangulaire ou en forme de bande est utilisé comme collecteur de courant (110) métallique.
b. Un collecteur de courant d'une électrode positive et/ou négative est utilisé comme collecteur de courant (110) métallique.
c. Le collecteur de courant (110) passe à travers la zone active d'au moins un dispositif d'induction (112).

3. Procédé selon la revendication 1 ou la revendication 2, comprenant les caractéristiques supplémentaires suivantes :
a. En vue de former l'au moins un film d'électrode (111a ; 111b), une pâte contenant un solvant et/ou un agent de suspension est appliquée en continu ou de manière intermittente sur le collecteur de courant (110) en forme de bande.
b. Le solvant et/ou l'agent de suspension sont éliminés lors du traitement thermique.

4. Procédé selon la revendication 3, comprenant la caractéristique supplémentaire suivante :
a. L'élimination du solvant et/ou de l'agent de suspension est assistée par mise en contact de l'au moins un film d'électrode (111a ; 111b) avec un flux de gaz chauffé.

5. Procédé selon la revendication 4, comprenant au moins l'une des caractéristiques supplémentaires suivantes :
a. Le solvant et/ou l'agent de suspension éliminés sont séparés du flux de gaz au moyen d'un dispositif de condensation.
b. L'au moins un dispositif de condensation est positionné dans le trajet d'écoulement du flux de gaz.
c. Le solvant et/ou l'agent de suspension sont condensés au niveau du dispositif d'induction (112), notamment au niveau d'une bobine de l'au moins un dispositif d'induction (112).
d. La bobine de l'au moins un dispositif d'induction (112) est refroidie en vue du transport de la condensation.

6. Procédé selon l'une des revendications précédentes, comprenant la caractéristique supplémentaire suivante :
a. Le traitement thermique est effectué immédiatement avant que l'au moins un film d'électrode (111a ; 111b) soit exposé à des contraintes thermiques.

7. Procédé selon la revendication 1 ou la revendication 2, comprenant au moins l'une des caractéristiques supplémentaires suivantes :
a. Le film d'électrode à traiter thermiquement est un élément constitutif d'une cellule comprenant au moins une électrode positive et au moins une négative.
b. Le film d'électrode à traiter thermiquement est un élément constitutif d'une cellule disposée dans un boîtier fermé et rempli d'électrolyte.

8. Arrangement (100) de traitement thermique d'au moins un film d'électrode (111a ; 111b) sur un collecteur de courant (110) métallique, **caractérisé par** les caractéristiques suivantes :
a. L'arrangement comprend au moins un dispositif d'induction (112).
b. L'arrangement comprend un moyen de transport (113 ; 114) afin de faire passer l'au moins un film d'électrode (111a ; 111b), y compris le collecteur de courant (110), à travers la zone active de l'au moins un dispositif d'induction (112).
c. L'arrangement (100) comprend au moins un dispositif de condensation destiné à condenser le solvant et/ou l'agent de suspension qui s'écoule hors du film d'électrode.
d. Une bobine de l'au moins un dispositif d'induction (112) sert de dispositif de condensation.

9. Arrangement selon la revendication 8, comprenant les caractéristiques supplémentaires suivantes :
a. La bobine est couplée à au moins une source de fluide de thermostatisation de telle sorte qu'elle peut être refroidie et/ou réchauffée avec le fluide de thermostatisation en provenance de l'au moins une source de fluide de thermostatisation .
b. La bobine comprend des canaux internes qui peuvent être traversés par un courant de fluide de thermostatisation en provenance de la source de fluide de thermostatisation.

10. Arrangement selon la revendication 8 ou la revendication 9, comprenant les caractéristiques supplémentaires suivantes :
a. L'arrangement comprend au moins un dispositif collecteur de condensat (115) destiné à collecter le condensat qui se forme dans ou sur le dispositif de condensation, notamment sur une surface de l'au moins une bobine.
b. Le dispositif collecteur de condensat comprend un matériau pouvant être chauffé de manière non inductive ou se compose d'un tel matériau.
